Europäisches Patentamt

European Patent Office

Office européen des brevets

(11) Veröffentlichungsnummer: **0 017 252**
**A1**

(12) **EUROPÄISCHE PATENTANMELDUNG**

(21) Anmeldenummer: 80101872.2

(22) Anmeldetag: 08.04.80

(51) Int. Cl.³: **H 04 Q 7/04**
**H 04 M 1/272**

(30) Priorität: **07.04.79 DE 2914131**

(43) Veröffentlichungstag der Anmeldung:
**15.10.80 Patentblatt 80/21**

(84) Benannte Vertragsstaaten:
**AT DE FR IT**

(71) Anmelder: **ROBERT BOSCH GMBH**
**Postfach 50**
**D-7000 Stuttgart 1(DE)**

(72) Erfinder: **Dallmann, Horst**
**Wiersichweg 5**
**D-1000 Berlin 13(DE)**

(74) Vertreter: **Schmidt, Hans-Ekhardt**
**Robert Bosch GmbH Geschäftsbereich Elektronik**
**Patent- und Lizenzabteilung Forckenbeckstrasse 9-13**
**D-1000 Berlin 33(DE)**

(54) **Funkanlage.**

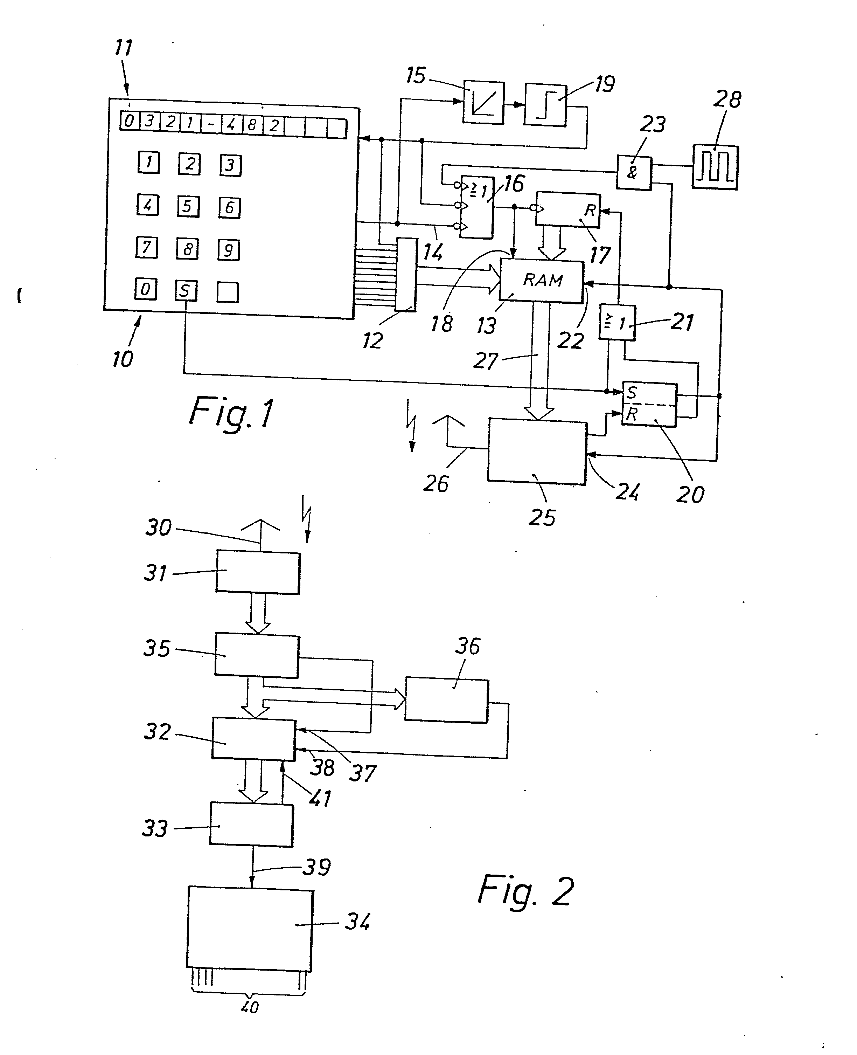

(57) Es wird eine Funkanlage mit einer zentralen Empfangsstation (Fig. 2), an die mehrere, über elektrische Leitungen verbundene Teilnehmerstationen angeschlossen sind, sowie mit wenigstens einer Sendestation (Fig. 1) vorgeschlagen. Die Sendestation umfaßt eine Speichereinrichtung (13) zur Einspeicherung von aus Codeworten bestehenden Teilnehmeradressen durch eine Wählschalteranordnung bzw. Zifferntastenanordnung (10), wobei die gespeicherten Adressen jeweils durch einen Schaltbefehl der zentralen Empfangsstation übermittelt werden. Durch einen Schaltbefehl, insbesondere durch ein längeres Betätigen einer Zifferntaste, wird nach dem der Zifferntaste zugeordneten Codewort ein Verzögerungscodewort in den Speicher (13) eingespeichert. Die Empfangsstation enthält eine Erkennungseinrichtung (33) für dieses Verzögerungscodewort, durch die die dem Verzögerungscodewort nachfolgenden Codeworte verzögert werden. Bei einer Funktelefonanlage wird dieses Verzögerungscodewort vorzugsweise nach der Vorwahl-Ziffernfolge eingefügt, um der Teilnehmer-Wähleinrichtung (34) Zeit zu lassen, eine freie Querverbindungsleitung zu finden. Andernfalls bestünde die Gefahr, daß Teile der der Vorwahl-Ziffernfolge nachfolgenden Teilnehmer-Ziffernfolge verlorengingen.

Fig. 1

14/79
EK/PLI Ve/Li
4. Apr. 1979

ROBERT BOSCH GMBH, 7000 Stuttgart

Funkanlage

Stand der Technik

Die Erfindung geht aus von einer Funkanlage nach der Gattung
des Hauptanspruchs. Es sind schon solche Funkanlagen zum Beispiel aus der DE-OS 26 20 250 oder aus "BOSCH-Funk/Technische
Informationen", Ausgabe 1978, Automatik-Autotelefon OF 4 C,
bekannt, bei denen zur schnellen Funkübertragung die vollständige Teilnehmeradresse (Telefon-Nummer) mittels Zifferntasten in einen elektronischen Speicher eingegeben werden, um
dann anschließend auf einen Sendebefehl hin zu einer zentralen Empfangsstation übertragen zu werden. Dort wird dann die
eigentliche Telefonwahl zu den über elektrische Leitungen mit
der Empfangsstation verbundenen Teilnehmerstationen durchgeführt. In vielen Telefonnetzen, insbesondere im privaten
Bereich bei Nebenstellenanlagen, mit vielen Querverbindungsübertragern muß nach der Vorwahl die Wählanlage zunächst eine
freie Querverbindungsleitung finden, um dann die Nummer des
speziellen Teilnehmers anzuwählen. Dieses Suchen einer freien
Querverbindungsleitung erfordert eine bestimmte Zeit, während der weitere Informationen vom Sender her nicht registriert werden können. Dadurch können Teile der speziellen Teilnehmeradresse, die auf die Vorwahl folgt, verlorengehen, eine Verbindung kommt nicht zustande, und ein erneuter Wählversuch muß gestartet werden.

Vorteile der Erfindung

Die erfindungsgemäße Funkanlage mit den kennzeichnenden Merkmalen des Hauptanspruchs hat demgegenüber den Vorteil, daß durch Einfügung von Verzögerungscodeworten zwischen die Codeworte der anzuwählenden Adresse bei Bedarf solche Schaltzeiten auf der Empfängerseite berücksichtigt werden können. Dadurch ist ein sichereres Erreichen des angewählten Teilnehmers möglich.

Durch die in den Unteransprüchen aufgeführten Maßnahmen sind vorteilhafte Weiterbildungen und Verbesserungen der im Hauptanspruch angegebenen Funkanlage möglich. Besonders vorteilhaft ist es, dieses Verzögerungscodewort durch eine längere Betätigung derjenigen Wähltaste einzufügen, hinter deren zugeordnetes Adressencodewort das Verzögerungscodewort eingespeichert und übertragen werden soll. Durch diese Maßnahme sind keine zusätzlichen Tasten erforderlich. Weist die Sendestation ein Display zur Anzeige der eingegebenen Codeworte auf, so erscheint dort vorteilhaft auch ein Symbol für das eingegebene Verzögerungscodewort.

Zeichnung

Ausführungsbeispiele der Erfindung sind in der Zeichnung dargestellt und in der nachfolgenden Beschreibung näher erläutert. Es zeigen

Fig. 1   eine schaltungsmäßige Ausgestaltung einer Sendestation,

Fig. 2   eine schematische Darstellung einer Empfangsstation und

Fig. 3   eine Darstellung eines Funktionsablaufs bei der
         Realisierung der Sendestation durch einen Mikrorechner.

Beschreibung der Ausführungsbeispiele

Die in Fig. 1 dargestellte Sendestation weist eine Tastatur 10 zur Eingabe der Codeworte für die anzuwählende
Teilnehmerstation auf. Diese Tastatur 10 besteht aus zehn
Zifferntasten einer Sendetaste S sowie einer unbezeichneten
Taste, die die Möglichkeit der Steuerung weiterer Funktionen, wie zum Beispiel der Kanalwahl, symbolisieren soll.
Dieser Tastatur 10 ist ein Display 11 zugeordnet, auf dem
die entsprechenden Ziffern bei Betätigung der Zifferntasten
erscheinen. Auf diese Weise kann kontrolliert werden, ob
die richtige Codekombination eingegeben worden ist. Jede
der Zifferntasten ist mit einer Codiereinrichtung 12 verbunden, deren Binärausgänge mit einem Schreib/Lese-Speicher
(RAM) 13 verbunden sind. Bei Betätigung jeder der Zifferntasten wird ein Signal auf einer Leitung 14 erzeugt, durch
die die Zifferntasten sowohl mit einem Integrator 15 als
auch mit einem Eingang eines ODER-Gatters 16 verbunden sind.
Der Ausgang des ODER-Gatters 16 ist mit dem Takteingang
eines Zählers 17 sowie mit dem Einspeicher-Befehlseingang 18
des RAM 13 verbunden. Der als Adressenzähler eingesetzte
Zähler 17 wählt die Adressen des RAM 13 an. Der Ausgang des
Integrators 15 ist über eine Schwellwertstufe 19 mit dem
Display 11, mit einem Eingang der Codiereinrichtung 12 sowie
mit einem Eingang des ODER-Gatters 16 verbunden.

Die Sendetaste S ist sowohl an den Setzeingang S eines Flipflops 20 als auch über ein ODER-Gatter 21 an den Rücksetzeingang R des Zählers 17 angeschlossen. Der erste Ausgang
des Flipflops 20 ist mit dem Auslese-Befehlseingang 22 des
RAM 13, mit einem Eingang eines UND-Gatters 23 sowie mit dem
Sende-Befehlseingang 24 eines HF-Sendeteils 25 der Sendestation verbunden. An den Sendeteil 25 ist eine Sendeantenne 26
angeschlossen. Über einen Bus 27 können die im RAM 13 eingespeicherten Codeworte dem Sendeteil 25 zugeführt werden. Ein
Auslese-Taktgenerator 28 ist über das UND-Gatter 23 mit einem
weiteren Eingang des ODER-Gatters 16 verbunden. Sämtliche Eingänge dieses ODER-Gatters 16 sind dynamische Eingänge.

Die Wirkungsweise des in Fig. 1 dargestellten Ausführungsbeispiels besteht darin, daß durch die Codiereinrichtung 12 jeder
Zifferntaste des Tastenfeldes 10 ein Vier-Bit-Binärwort zugeordnet wird, und zwar so, daß bei Betätigung aller dieser
Tasten das zugehörige Binärwort am RAM 13 anliegt. Gleichzeitig
liegt an der Leitung 14 ein Signal an, durch das über das
ODER-Gatter 16 und den Eingang 18 das anliegende Binärwort im
RAM 13 eingespeichert wird. Dieser Einspeicherbefehl muß
natürlich in bekannter Weise jeweils etwas verzögert auftreten,
um sicherzustellen, daß am Ausgang der Codiereinrichtung 12
bereits die einzuspeichernde Information vorliegt. Die Speicherzelle ist dabei durch die Zeilenausgänge des Adressenzählers 17
festgelegt. Durch dieses Signal auf der Leitung 14 wird weiterhin der Adressenzähler 17 auf die nächste Adresse weitergeschaltet. Schließlich wird durch dieses auf der Leitung 14
liegende Signal noch der Integrator 15 gesteuert und nach
Beendigung dieses Signals rückgesetzt. Wird durch das Ausgangssignal des Integrators 15 der Schwellwert der Schwellwertstufe 19 erreicht, so wird einmal über die Codiereinrichtung 12 ein Verzögerungscodewort an den RAM 13 angelegt und
über das ODER-Gatter 16 eingespeichert. Der Zähler 17 wird

wiederum auf die nächste Adresse weitergeschaltet. Schließlich wird durch das Ausgangssignal der Schwellwertstufe 19
noch ein dem Verzögerungscodewort zugeordnetes Symbol - im
dargestellten Fall ein Querstrich - auf das Display 11 gegeben. Sind alle Codeworte eingespeichert - in der Darstellung
vier Vorwahl-Codeworte, ein Verzögerungscodewort und drei
speziell einem Teilnehmer zugeordnete Codeworte -, so kann
die Sendetaste S des Tastenfeldes 10 betätigt werden. Diese
Betätigung bewirkt einmal ein Setzen des Flipflops 20 und
weiterhin - über das ODER-Gatter 21 - ein Rücksetzen des
Adressenzählers 17. Durch das an einem Ausgang erzeugte
Ausgangssignal am Flipflop 20 wird über das UND-Gatter 23
der Auslesetakt des Taktgenerators 28 freigegeben, so daß
nacheinander die Adressen des RAM 13 angewählt werden und
durch den Befehl am Eingang 22 ausgelesen werden. Durch den
Befehl am Eingang 24 des Sendeteils 25 übernimmt dieser die
ausgelesenen Codeworte und sendet entsprechende HF-Signale
aus. Durch eine im Sendeteil 25 enthaltene Decodiereinrichtung wird festgestellt, daß alle Codeworte ausgelesen sind,
worauf das Flipflop 20 über eine Verbindungsleitung rückgesetzt wird. Über den komplementären Ausgang des Flipflops 20
und das ODER-Gatter 21 hat dies auch ein Rücksetzen des
Adressenzählers 17 zur Folge.

Die zum Teil vereinfacht dargestellten und beschriebenen
Funktionen sind - mit Ausnahme der Baugruppen und Funktionen
zur Erzeugung des Verzögerungscodewortes - im eingangs angegebenen Stand der Technik detaillierter beschrieben. So
wurde zum Beispiel zur Vereinfachung der Darstellung auf
alles verzichtet, was die der Adressencodierung nachfolgende
Informationsübertragung betrifft.

In Fig. 2 ist in schematischer Weise ein Ausführungsbeispiel
einer Empfangsstation im Blockschaltbild dargestellt. Das
empfangene HF-Signal gelangt über eine Empfangsantenne 30 zu
einem HF-Empfangsteil 31. Die empfangenen Signale werden in
einem Decodierer 35 zum Beispiel in Vier-Bit-Binärworte umgewandelt und einem Wahlspeicher 32 zugeführt. Zusätzlich ist
an den Decodierer 35 ein Erkennungsbaustein 36 angeschlossen,
welcher erkennt, daß die Übertragung von Wählziffern beendet
ist. Über den Signaleingang 37 wird das Einschreiben der
Vier-Bit-Binärziffern in den Wahlspeicher 32 gesteuert. Nachdem der Erkennungsbaustein 36 das Übertragungsende der Wahlziffern erkannt hat, steuert er über die Signalleitung 38 das
Auslesen der Wahlziffern aus dem Wahlspeicher 32. Die Wähleinrichtung 33 setzt die auf dem Funkweg übertragenen und im
Wahlspeicher 32 zum Beispiel als Vier-Bit-Worte gespeicherten
Informationen in Telefon-Wahlimpulse um und führt sie über
die Signalleitung 39 der Teilnehmer-Wähleinrichtung 34 zu.
Sind an diese Einrichtung mehrere Querverbindungsübertrager 40
angeschlossen, so erfolgt hier eine sequentielle Abfrage, bis
eine freie Leitung gefunden ist.

Im Takt der eingehenden Adressencodeworte werden diese nacheinander in den Wahlspeicher 32 eingespeichert und nach Wahlende ausgelesen und an die Wähleinrichtung 33 sequentiell
nach einem vorgegebenen Schema ausgegeben. Erkennt die Wähleinrichtung ein Pausensignal, so signalisiert sie über die
Leitung 41 ein Stoppsignal an den Wahlspeicher 32. Dort wird
das weitere Auslesen der Wahlinformation - zum Beispiel
durch ein Verzögerungsglied - für eine vorgegebene Zeit, zum
Beispiel 1,5 oder 2 s, unterbrochen und danach fortgesetzt.
In dieser Zeit hat die Teilnehmer-Wähleinrichtung 34 genügend
Zeit, eine freie Querverbindung zu finden, bevor weitere
Wählinformationen ausgelesen und ausgeführt werden.

14/79                     - 7 -

Die in Fig. 1 und Fig. 2 dargestellte Sende- und Empfangsstation kann natürlich jeweils auch als kombinierte Sende-/
Empfangsstation ausgebildet sein.

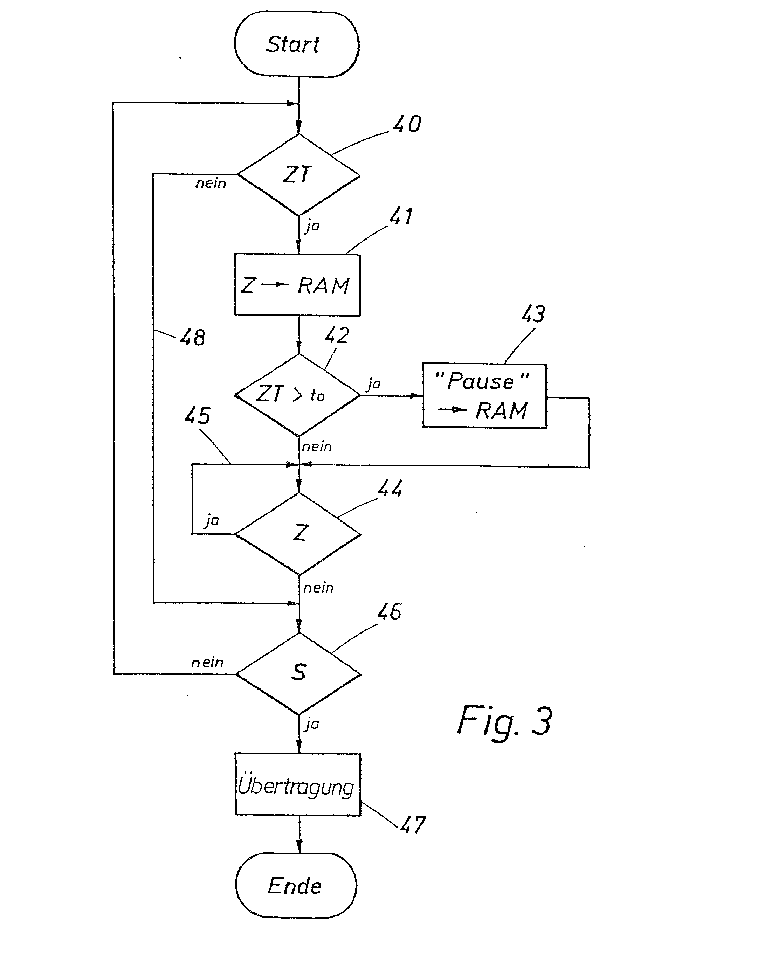

Die beschriebenen Funktionen können äquivalent durch einen
Mikrorechner realisiert werden. Ein entsprechender Funktionsablauf für die Sendestation ist in Fig. 3 dargestellt. Durch
Betätigung einer der Tasten des Tastenfeldes 10 wird der
Prozeß gestartet. Durch den Block 40 erfolgt zunächst die
Abfrage, ob eine der Zifferntasten ZT gedrückt ist. Dies wird
zunächst der Fall sein, da das Programm durch Drücken dieser
Taste gestartet wurde. Durch den Block 41 erfolgt eine Übernahme der der gedrückten Taste zugeordneten Binärzahl Z in
den RAM 13. Im Block 42 wird danach abgefragt, ob die Zifferntaste ZT länger als eine festlegbare Zeit $t_0$ von zum Beispiel 2 s gedrückt ist. Ist dies der Fall, so erfolgt eine
Einspeicherung des festgelegten Verzögerungscodeworts in den
RAM 13 (Block 43). Erfolgt eine bezüglich $t_0$ kürzere Betätigung der Taste, so wird zum Block 44 weitergeschaltet, durch
den eine erneute Abfrage erfolgt, ob die Taste noch gedrückt
ist. Ist sie gedrückt, so wird in der Warteschleife 45 solange
gewartet, bis ein Ende der Betätigung eintritt. Durch den
Block 46 wird dann abgefragt, ob die Sendetaste S gedrückt ist.
Dies wird gewöhnlich nach Betätigung der ersten Zifferntaste
noch nicht der Fall sein, wodurch der Prozeß zum Block 40
zurückspringt. Dieser Vorgang wiederholt sich solange, bis
nach Einspeicherung sämtlicher Adreßwerte durch die Zifferntasten die Sendetaste S betätigt wird, wodurch vom Block 46 ein
Übergang auf den Block 47 erfolgt, durch den die gespeicherten
Informationen über das Sendeteil 25 übertragen werden. Nach dem
Ende der Übertragung ist das Programm beendet. Durch die Überbrückungsleitung 48 erfolgt ein direkter Übergang vom Block 40
auf den Block 46. Dies ist erforderlich, da nach Betätigung der letzten Zifferntaste infolge der Schnelligkeit der aufeinanderfolgenden Programmschritte die Sendetaste S noch
nicht betätigt ist. Eine nicht betätigte Sendetaste ergibt
jedoch eine Rückführung des Programms zum Block 40. Da eine
Zifferntaste ab diesem Zeitpunkt nicht mehr gedrückt wird,
muß ein direkter Übergang zur Abfragestellung der Sendetaste
möglich sein.

Im Rahmen der Erfindung können natürlich auch die übrigen,
diskret dargestellten Baugruppen vorteilhaft durch einen
Mikrorechner realisiert werden.

Sofern für das Verzögerungscodewort kein geeignetes Codezeichen mehr verfügbar ist, weil der gesamte Codezeichenvorrat für den Auf- und Abbau von Verbindungen einschließlich
der Ziffernübertragung erforderlich ist, kann für das Pausenkriterium ein Codezeichen innerhalb der Gesprächssignalisierung eingesetzt werden, welches an sich andere Aufgaben, zum
Beispiel die Quittierung eines Anrufs von der ortsfesten
Funkstelle (zentrale Empfangsstation), zu erfüllen hat. In
dieser zentralen Empfangsstation sind Decodiereinrichtungen
vorhanden, die aufgrund der Stellung des Verzögerungscodewortes innerhalb des Datentelegramms die gültige Interpretation vornehmen.

14/79
EK/PLI Ve/Li
4. Apr. 1979

ROBERT BOSCH GMBH, 7000 Stuttgart

Ansprüche

1. Funkanlage mit einer zentralen Empfangsstation, an die mehrere, über elektrische Leitungen verbundene Teilnehmerstationen angeschlossen sind, mit wenigstens einer Sendestation, die eine Speichereinrichtung zur Einspeicherung von aus Codeworten bestehenden Teilnehmeradressen durch eine Wählschalteranordnung enthält, wobei die gespeicherten Adressen durch einen Schaltbefehl der zentralen Empfangsstation übermittelt werden, dadurch gekennzeichnet, daß eine Schaltvorrichtung vorgesehen ist, durch die während des Einspeichervorgangs der Codeworte ein Verzögerungscodewort einspeicherbar ist, und daß die Empfangsstation (Fig. 2) eine Erkennungseinrichtung (33) für das Verzögerungscodewort enthält, durch die die dem Verzögerungscodewort nachfolgenden Codeworte verzögert werden.

2. Funkanlage nach Anspruch 1, dadurch gekennzeichnet, daß eine Meßeinrichtung für die Betätigungszeitdauer bei der aus Tastschaltern bestehenden Wählschalteranordnung vorgesehen ist, durch die bei Überschreitung einer festlegbaren Betätigungszeitdauer ein Einspeicherbefehl für das Verzögerungscodewort auslösbar ist.

3. Funkanlage mit einem Display (11) für die eingespeicherten Adressencodeworte nach Anspruch 1 oder 2, dadurch gekennzeichnet, daß bei Einspeicherung des Verzögerungscodewortes ein Steuersignal für das Display (11) zur Anzeige eines festlegbaren Symbols erzeugbar ist.

0017252

14/79                     - 2 -

4. Funkanlage nach einem der vorhergehenden Ansprüche,
   gekennzeichnet durch die Ausgestaltung wenigstens
   der Einspeicher- und Auslesevorrichtungen als Mikrorechner.

1 / 2

0017252

Fig. 1

Fig. 2

0017252

Fig. 3

Europäisches
Patentamt

**EUROPÄISCHER RECHERCHENBERICHT**

Nummer der Anmeldung

EP 80 10 1872

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 736 075 (SIEMENS) <br> * Anspruch 1; Seite 4, Zeilen 15-29 * <br><br> -- <br><br> | 1,2 |
| A | DE - B - 2 032 967 (ROBERT BOSCH ELEKTRONIK) <br> * Spalte 3, Zeile 48 - Spalte 4, Zeile 39; Figur 3 * <br><br> | 1,3 |

**KLASSIFIKATION DER ANMELDUNG (Int.Cl. 3)**

H 04 Q 7/04
H 04 M 1/272

**RECHERCHIERTE SACHGEBIETE (Int. Cl. 3)**

H 04 M 1/272
     1/274
H 04 Q 7/00
     7/04

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 18-06-1980 | WANZEELE |

EPA form 1503.1 06.78